# EUROPEAN PATENT APPLICATION

(11) **EP 3 016 100 A1**
(43) Date of publication of application: **04.05.2016**
(21) Application number: 15191505.5
(22) Date of filing: 26.10.2015
(51) Int. Cl.: G09G 5/00

(54) **ELECTRONIC APPARATUS AND CONTROLLING METHOD THEREOF**

(30) Priority: 29.10.2014 KR 20140148153
(71) Applicant: Samsung Electronics Co., Ltd., Gyeonggi-do 16677 (KR)
(72) Inventor: KIM, Kyoung-wook, Seoul (KR)
(74) Representative: Walaski, Jan Filip

(57) **Abstract**

An electronic apparatus that includes a plurality of input ports configured to be respectively connected to a plurality of external input sources, a storage configured to store extended display identification data (EDID) information commonly provided to the plurality of input ports, and a controller configured to provide the common EDID information to a corresponding external input source when at least one of the plurality of external input sources does not receive the common EDID information according to a preset event. Accordingly, common EDID information supporting a plurality of input ports is stored in the storage such that a plurality of storages connected to each respective input port is not required.

## Description

The present invention relates to an electronic apparatus and a controlling method thereof, and more particularly, to an electronic apparatus and a controlling method thereof, for providing extended display identification data (EDID) of each input port.

By virtue of the development of electronic technologies, various types of electronic products have been developed and spread. In particular, various electronic apparatuses such as a television (TV), a cellular phone, a personal computer (PC), a notebook PC, and a personal digital assistant (PDA) have been mainly used in general home.

As such, a plurality of electronic apparatuses are generally supplied, the number of electronic apparatuses including a plurality of input ports for support of connection with a plurality of electronic apparatuses has increased, and a conventional method for supporting extended display identification data (EDID) of each input port has been used without changes.

In the conventional method for supporting EDID of each input port, a storage for storing EDID information for supporting each input port is connected to each input port, and electronic apparatuses connected to respective input ports read and use the EDID information from the storage connected to each input port.

For example, with regard to an electronic apparatus including four input ports, the electronic apparatus needs to include 4 total storages for storing EDID information for supporting four input ports one storage corresponding to each port, and the four storages may download the EDID information from a main system of the electronic apparatus.

Accordingly, electronic apparatuses connected to the respective four input ports read EDID information from the respective four storages, and in this case, there is a problem in that an operation of checking whether the EDID information is appropriately read from each storage by the main system of the electronic apparatus needs to be performed four times.

Additional aspects and/or advantages will be set forth in part in the description which follows and, in part, will be apparent from the description, or may be learned by practice of the embodiments.

Exemplary embodiments overcome the above disadvantages and other disadvantages not described above. Also, the present embodiments are not required to overcome the disadvantages described above, and an exemplary embodiment may not overcome any of the problems described above.

The embodiments provide an electronic apparatus an electronic apparatus including a storage for storing common extended display identification data (EDID) information that is commonly provided to a plurality of input ports, and a controlling method thereof.

According to an aspect, an electronic apparatus includes a plurality of input ports configured to be respectively connected to a plurality of external input sources, a storage configured to store extended display identification data (EDID) information commonly provided to the plurality of input ports, and a controller configured to provide the common EDID information to a corresponding external input source when at least one of the plurality of external input sources does not receive the common EDID information according to a preset event.

The electronic apparatus may further include a scaler connected to each of the plurality of input ports and configured to store individual EDID information items respectively corresponding to the plurality of input ports.

The storage may be a common memory commonly connected to the plurality of input ports.

The common memory may be an electrically erasable programmable read-only memory (EEPROM).

The common memory may provide the EDID information to the plurality of external input sources through the plurality of input ports activated based on power supplied by the plurality of external input sources.

The controller may toggle a signal for providing the common EDID information and control the plurality of external input sources to read the common EDID information from the common memory when at least one of the plurality of external input sources does not receive the common EDID information and does not perform output corresponding to the corresponding external input source.

The signal for providing the common EDID information may include a signal generated when the plurality of external input sources recognize the electronic apparatus in response to the preset event occurring.

The controller may toggle a signal generated when at least one of the plurality of external input sources recognizes the electronic apparatus and control the plurality of external input sources to read individual EDID information items respectively corresponding to the plurality of input ports from the scaler.

The preset event may be an event in which at least one of the plurality of external input sources is connected to at least one of the plurality of input ports.

According to another aspect, a method for controlling an electronic apparatus including a plurality of input ports configured to be respectively connected to a plurality of external input sources includes commonly providing pre-stored extended display identification data (EDID) to the plurality of input ports, and generating a signal for providing the common EDID information to a corresponding external input source when at least one of the plurality of external input sources does not receive the common EDID information according to a preset event.

The common EDID information may be stored in a common memory connected to each of the plurality of input ports, provided outside a scaler storing individual EDID information items respectively corresponding to the plurality of input ports, and commonly connected to each of the plurality of input ports.

The common memory may be an electrically erasable programmable read-only memory (EEPROM).

The providing may include providing the EDID information to the plurality of external input sources through the plurality of input ports activated based on power supplied from the plurality of external input sources.

The generating may include toggling a signal for providing the common EDID information and controlling the plurality of external input sources to read the common EDID information from the common memory when at least one of the plurality of external input sources does not receive the common EDID information and does not perform output corresponding to the corresponding external input source.

The signal for providing the common EDID information may include a signal generated when the plurality of external input sources recognize the electronic apparatus in response to the preset event occurring.

The method may further include toggling a signal generated when at least one of the plurality of external input sources recognizes the electronic apparatus and controlling the plurality of external input sources to read individual EDID information items respectively corresponding to the plurality of input ports from the scaler.

The preset event may be an event in which at least one of the plurality of external input sources is connected to at least one of the plurality of input ports.

According to the aforementioned various embodiments, common EDID information supporting a plurality of input ports may be stored in the storage such that a plurality of storages connected to each respective input ports is not required, thereby reducing material costs, reducing the number of production processes, and enhancing convenience in terms of future error management associated with EDID.

According to another aspect an electronic apparatus includes input ports configured to be connectable to external input sources, a single storage configured to store extended display identification data (EDID) information provided to the input ports as common EDID information, and a controller configured to provide the common EDID information to a corresponding external input source when at least one of the plurality of external input sources does not receive the common EDID information according to a preset event.

According to another aspect an electronic apparatus includes input ports configured to be connectable to external input sources, a storage configured to store extended display identification data (EDID) information provided to the input ports as common EDID information, and a controller configured to provide the common EDID information to a corresponding external input source when at least one of the plurality of external input sources does not receive the common EDID information according to a preset event.

The single storage may be connected to all of the input ports.

Additional and/or other aspects and advantages will be set forth in part in the description which follows and, in part, will be obvious from the description, or may be learned by practice of the embodiments.

The above and/or other aspects will be more apparent by describing certain exemplary embodiments with reference to the accompanying drawings, in which:
FIG. 1 is a block diagram illustrating a configuration of an electronic apparatus according to an exemplary embodiment;
FIG. 2 is a block diagram illustrating a detailed configuration of an electronic apparatus according to an exemplary embodiment;
FIG. 3 is a diagram illustrating a data path of a plurality of input ports, a storage, a controller, and a scaler according to an exemplary embodiment;
FIG. 4 is a diagram for explanation of a problem that occurs when a plurality of external input sources is connected to at least two of a plurality of input ports, according to an exemplary embodiment;
FIG. 5 is a diagram for explanation of an operation for toggling a signal for providing common EDID information according to an exemplary embodiment;
FIG. 6 is a diagram for explanation of the case in which an external input source device connected to an input port is capable of supporting additional EDID information according to an exemplary embodiment; and
FIG. 7 is a flowchart for explanation of a method for controlling an electronic apparatus including a plurality of input ports to be respectively connected to a plurality of external input sources, according to an exemplary embodiment.

Reference will now be made in detail to the embodiments, examples of which are illustrated in the accompanying drawings, wherein like reference numerals refer to the like elements throughout. The embodiments are described below to explain the embodiments by referring to the figures.

Certain exemplary embodiments will now be described in greater detail with reference to the accompanying drawings. In the following description, a detailed description of known functions and configurations incorporated herein will be omitted when it may make the subject matter unclear. The terms used in the specification are defined in consideration of functions used, and can be changed according to the intent or conventionally used methods of clients, operators, and users. Accordingly, definitions of the terms should be understood on the basis of the entire description of the present specification.

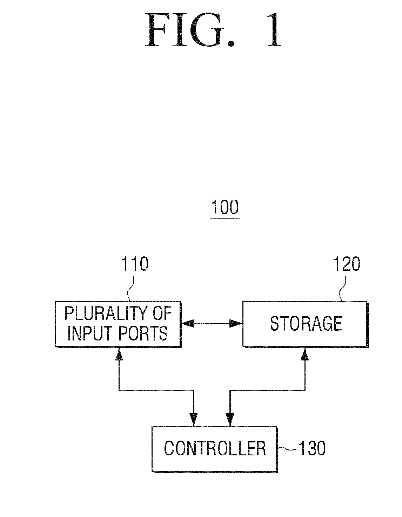

FIG. 1 is a block diagram illustrating a configuration of an electronic apparatus 100 according to an exemplary embodiment.

Referring to FIG. 1, the electronic apparatus 100 includes a plurality of input ports 110, a storage 120, and a controller 130. Here, the electronic apparatus 100 may be embodied in various forms such as a television (TV), an interactive whiteboard, an electronic table, a large format display (LFD), a smart phone, a tablet personal computer (PC), a desk top PC, a notebook PC, and so on.

The plurality of input ports 110 are connected to a plurality of external input (and/or output) sources, respectively. In detail, the input (and/or output) port 110 refers to a channel used to transmit and receive data to and from a device, a central processing unit (CPU) of which is connected to the input port 110.

For example, the input port 110 may be embodied as a connector with standard features such as D-SUB, DVI, HDMI, and so on.

D-SUB as an abbreviation of D-subminiature may refer to the standard of a connector that is mainly used for a computer and may be divided into 9-pin, 15-pin, 25-pin, 37-pin, 50-pin, and so on.

DVI as an abbreviation of a digital visual interface may refer to the standard of digital format for transmitting and receiving a signal between a monitor and a graphic card and may be largely classified into DVI-D for transmitting only a digital signal and DVI-I for transmitting both a digital signal and an analog signal.

HDMI as an abbreviation of a high definition multimedia interface may refer to one of the standards of an interface for integrally transmitting non-compression type of digital video and audio signals. HDMI may be derived by changing DVI as interface standard of a PC and a display device to AV home appliance, may not require a decoder chip or software since data is transmitted to a TV from a player without compression of an image or voice signal, may refer to a standard replacing an existing analog port, and may be applied to a DVD player, a HD TV, or the like.

The plurality of external input sources connected to the aforementioned plurality of input ports 110 may transmit and receive data to and from the electronic apparatus 100 through the plurality of input ports 110.

The storage 120 stores common extended display identification data (EDID) information that is commonly provided to a plurality of input ports.

Here, the EDID information refers to standards for transmitting display information to a host, that is, a device connected to a display from the display. In detail, EDID information does not refer to an interface signal such as a display data channel (DDC) but is instead a data format for transmitting a supportable capability of the display to the host.

For example, when information items about a supportable resolution by the display are contained in EDID information and are transmitted to an external input source connected to the input port 110, the external input source may recognize the supportable resolution of the display and output contents according to the supportable resolution.

Conventionally, one storage is connected to each of the plurality of input ports 110 and each EDID information item for supporting each of the plurality of input ports 110 is stored in each storage. On the other hand, according to an exemplary embodiment, one storage instead of a plurality of storages may be used, and the storage 120 stores common EDID information that is commonly provided to the plurality of input ports 110.

For example, when the plurality of input ports 110 includes a connector with the standard such as D-sub, DVI, and HDMI, there may be EDID information items that respectively correspond to the standards such as D-sub, DVI, and HDMI. That is, EDID information corresponding to the D-sub standard may include information indicating that maximum outputtable (or output) resolution is 1280x720, EDID information corresponding to the DVI standard may include information indicating that maximum outputtable resolution is 1920x1080, and EDID information corresponding to the HDMI standard may include information indicating that maximum outputtable resolution is 2560x1440. That is, the EDID information items corresponding to the respective standards may be different.

Accordingly, the storage 120 according to the exemplary embodiment may store common information among the EDID information items corresponding to the respective standards. Here, common information among the EDID information items corresponding to the respective standards may be defined as common EDID information.

According to the aforementioned example, in terms of supportable maximum resolution, common information among the EDID information items that respectively correspond to the D-sub, DVI, and HDMI standards may be set at 1280x720. Accordingly, the storage 120 may store common EDID information including information indicating that supportable maximum resolution is 1280x720 in order to commonly provide the common EDID information to the plurality of input ports 110.

As described above, one storage is not connected to each of the plurality of input ports 110 and EDID information items for respectively supporting the plurality of input ports 110 are not stored in respective storages, but common EDID information including common parts of the EDID information items for respectively supporting the plurality of input ports 110 may be stored in one storage 120 that is commonly connected to the plurality of input ports 110.

Accordingly, the common EDID information that is commonly provided to the plurality of input ports 110 may be stored in one storage 120 such that a plurality of storages is not required, thereby reducing material costs, reducing the number of production processes, and enhancing convenience in terms of error management associated with EDID information downloading.

When at least one of a plurality of external input sources does not receive the common EDID information according to a preset event, the controller 130 may generate a signal for providing the common EDID information to the corresponding external input source. Here, the preset event may refer to an event in which at least one of a plurality of external input sources is connected to at least one of a plurality of input ports. That is, the present event may include both the case in which one of a plurality of external input source is connected to one of a plurality of input ports and the case in which each of a plurality of input sources is connected to a plurality of input ports. The generation of the signal for providing the common EDID information to the corresponding external input source will be described below in detail.

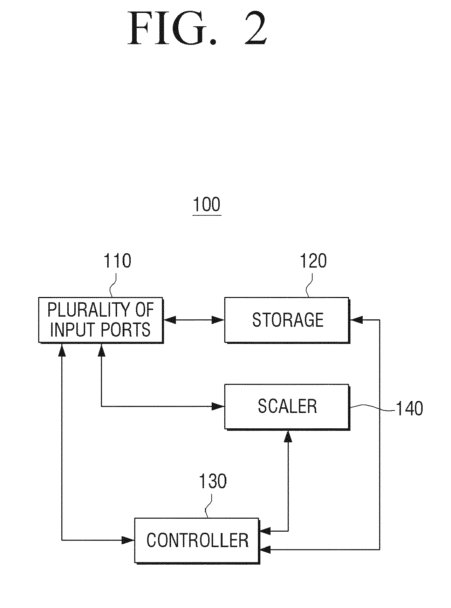

A configuration of the storage 120 according to the exemplary embodiment will be described in detail with reference to FIG. 2.

FIG. 2 is a block diagram illustrating a detailed configuration of an electronic apparatus 100 according to an exemplary embodiment.

Referring to FIG. 2, the electronic apparatus 100 may include the plurality of input ports 110, the storage 120, the controller 130, and a scaler 140. Here, the plurality of input ports 110, the storage 120, and the controller 130 have been described already, and thus a detailed description thereof will be omitted here.

The scaler 140 may be connected to each of the plurality of input ports 110 and may store the respective EDID information items corresponding to the plurality of input ports 110.

The respective EDID information items corresponding to the plurality of input ports 110 may refer to EDID information items that respective correspond to standards of D-sub, DVI, and HDMI when the plurality of input ports 110 include a connector with standard such as D-SUB, DVI, HDMI, and so on.

In addition, the EDID information items that respectively correspond to the standard such as D-SUB, DVI, HDMI, and so on may be stored in the scaler 140.

In addition, the storage 120 may be embodied as a common memory that is commonly connected to the plurality of input ports 110. The storage 120 may be separately provided outside the scaler 140.

Here, the common memory may be, for example, an electrically erasable programmable read-only memory (EEPROM).

That is, the plurality of EDID information items that respectively correspond to the standards of D-sub, DVI, and HDMI may be stored in the scaler 140, and common EDID information containing common information of the plurality of EDID information items that respectively correspond to the standards of D-sub, DVI, and HDMI may be stored in the storage 120, that is, a common memory that is commonly connected to the plurality of input ports 110.

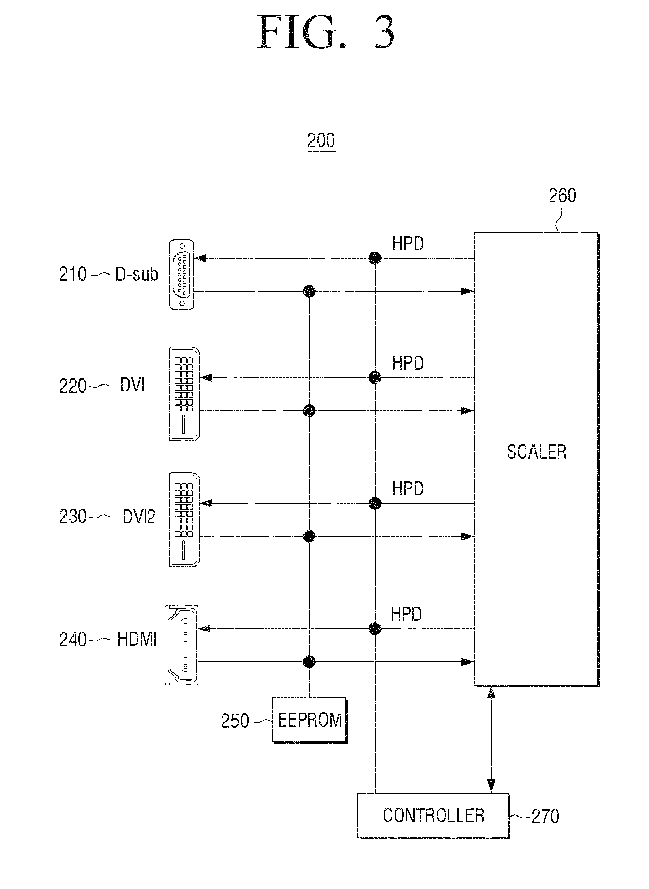

The common memory may provide the common EDID information to a plurality of external input sources through the plurality of input ports 110 that are activated based on power supplied from the plurality of external input sources, which will be described in detail with reference to FIG. 3.

FIG. 3 is a diagram illustrating a data path of a plurality of input ports, a storage, a controller, and a scaler according to an exemplary embodiment.

As seen from FIG. 3, the plurality of input ports 110 may include a D-sub port 210, a DVI port 220, a DVI 2 port 230, and an HDMI port 240, and an EEPROM 250 may be commonly connected to the D-sub port 210, the DVI port 220, the DVI 2 port 230, and the HDMI port 240. Here, the EEPROM 250 may correspond to the storage 120 described with reference to FIGS. 1 and 2, that is, a memory.

The EEPROM 250 may store common EDID information that is commonly provided to the D-sub port 210, the DVI port 220, the DVI 2 port 230, and the HDMI port 240.

In addition, the scaler 260 may be connected to each of the D-sub port 210, the DVI port 220, the DVI 2 port 230, and the HDMI port 240 and may store individual EDID information items that corresponds or is specific to the D-sub port 210, the DVI port 220, the DVI 2 port 230, and the HDMI port 240, respectively.

A controller 270 may be connected to the D-sub port 210, the DVI port 220, the DVI 2 port 230, and the HDMI port 240 so as to generate and transmit a signal for providing common EDID information through the D-sub port 210, the DVI port 220, the DVI 2 port 230, and the HDMI port 240 and may control the scaler 260.

In addition, in response to an external input source being connected to at least one of the D-sub port 210, the DVI port 220, the DVI 2 port 230, and the HDMI port 240, the EEPROM 250 corresponding to the common memory may determine a I2C path for transmitting and receiving data and clock frequency based on 5V power supplied from the external input source and change hot plug detect (HPD) of the external input source into High so as to provide the common EDID information to the external input source through a plurality of activated input ports.

That is, in response to the HDP of the external input source being changed into High, the EEPROM 250 may notify the external input source about that the electronic apparatus 100 is connected such that the external input source may read the common EDID information from the EEPROM 250.

In addition, the external input source may output content to an electronic apparatus 200 based on the common EDID information read from the EEPROM 250.

However, the case in which a plurality of external input sources are simultaneously connected to at least two of the plurality of input ports 110 may be considered. In this case, the plurality of external input sources may intend or attempt to simultaneously read the common EDID information from the EEPROM 250 and accordingly collision may occur between the plurality of external input sources.

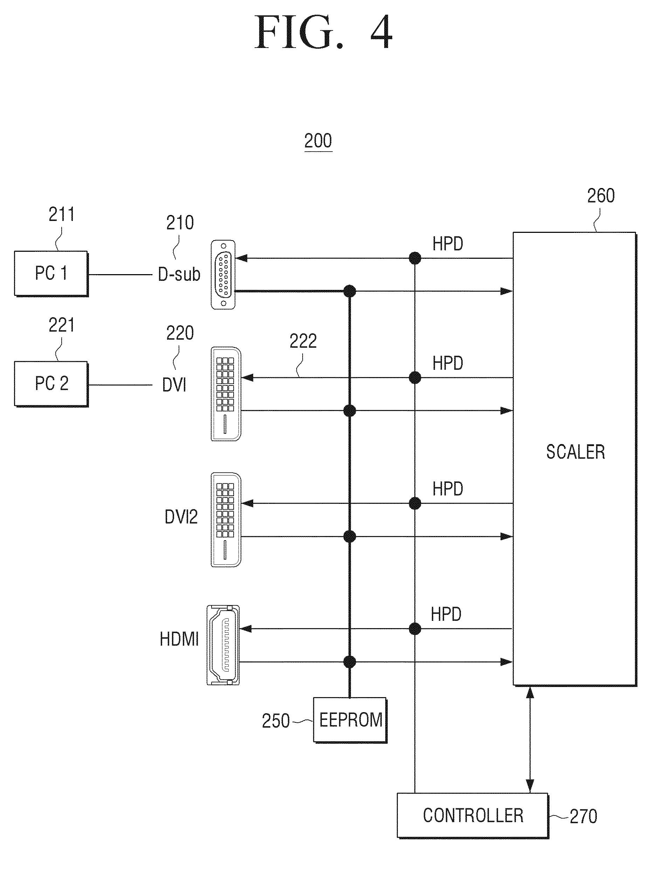

FIG. 4 is a diagram for an explanation of a problem that occurs when a plurality of external input sources is connected to at least two of a plurality of input ports, according to an exemplary embodiment.

Referring to FIG. 4, in response to a PC 1211 and a PC 2 221 being simultaneously connected to the D-sub port 210 and the DVI port 220, the PC 1211 and PC 2 221 may intend to simultaneously read the common EDID information from the EEPROM 250 such that the PC 1211 and the PC 2 221 may collide with each other. Accordingly, only the PC 1211 may read the common EDID information from the EEPROM 250 and the PC 2 221 may not read the common EDID information from the EEPROM 250.

In FIG. 4, a thick line connected between the D-sub port 210 and EEPROM 250 indicates that the common EDID information is transmitted only to the PC 1211 from the EEPROM 250.

That is, even if a user watches content output from the PC 1211 connected to the D-sub port 210 through the electronic apparatus 200 and then intends to watch content output from the PC 2 221 connected to the DVI port 220, normal output from the PC 2 221 connected to the DVI port 220 may not be performed.

Accordingly, when at least one of the plurality of external input sources does not receive the common EDID information and thus does not perform output corresponding to the corresponding external input source, the controller 270 may toggle a signal for providing the common EDID information and control the plurality of external input sources to read the common EDID information from the common memory.

Here, the signal for providing the common EDID information may include a signal generated when a preset event occurs and the plurality of external input sources recognize the electronic apparatus 200.

The signal generated when the plurality of external input sources recognize the electronic apparatus 200 refers to a signal obtained by converting a hot plug detect (HPD) of the external input source described with reference to FIG. 3 to High.

In addition, when the external input source recognizes the electronic apparatus 200, the controller 270 may control the external input source to convert the HPD of the external input source to High and to read the common EDID information stored in the EEPROM 250. Here, when at least one external input source may not or does not read the common EDID information from the EEPROM 250 due to a collision between the plurality of external input sources, the controller 270 may generate a signal for providing the common EDID information to at least one external input source.

In detail, the controller 270 may toggle the signal for providing the common EDID information to the corresponding external input source and control the external input source to read the common EDID information from the EEPROM 250.

With reference to FIG. 4, when the PC 2 221 may not read the common EDID information from the EEPROM 250, the controller 270 may toggle a signal 222 for providing the common EDID information to the PC 2 221 and control the PC 2 to read the common EDID information from the EEPROM 250.

Here, an operation for toggling the signal for providing the common EDID information by the controller 270 will be described in detail.

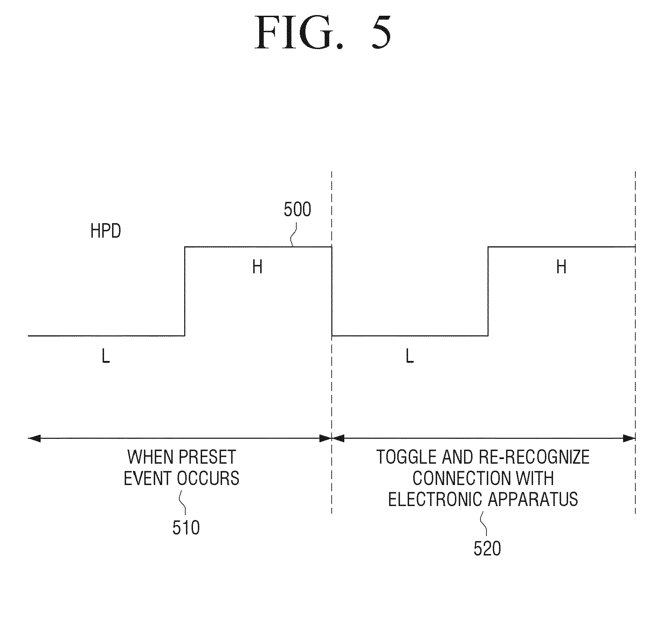

FIG. 5 is a diagram for an explanation of an operation for toggling the signal for providing common EDID information according to an exemplary embodiment.

The signal for providing the common EDID information may include a signal generated when a preset event occurs and the plurality of external input sources recognize the electronic apparatus 200 and may be a signal 500 obtained by toggling HPD of the external input source, generated by the controller 270 into High from Low so as to recognize that the external input source is connected to the electronic apparatus 200, like in FIG. 5.

That is, the preset event refers to an event in which at least one of a plurality of external input sources is connected to at least one of the plurality of input ports 110, and accordingly, when the preset event in which a plurality of external input sources are connected to the plurality of input ports 110 occurs 510, the controller 270 may generate the signal 500 obtained by toggling HPD of the external input source into High from Low.

Accordingly, the plurality of external input sources may read the common EDID information from the EEPROM 250.

However, even if the plurality of external input sources is connected to the plurality of input ports 110, when at least one of the plurality of external input sources may not read the common EDID information from the EEPROM 250 due to collision between the plurality of external input sources, the controller 270 may re-toggle the signal 500 obtained by toggling HPD of the external input source that may not read the common EDID information to High from Low, that is, may convert the signal 500 into a low value and then convert the low value into a high value 520 so as to allow the external input source that may not have read the common EDID information to re-recognize the electronic apparatus 200.

Accordingly, the external input source that re-recognizes the electronic apparatus 200 may re-read the common EDID information from the EEPROM 250.

With regard to an explanation of a collision between a plurality of external input sources, although the case in which a plurality of external input sources are simultaneously connected to a plurality of external input ports 110 has been described, the case may include the case in which at least one external input source may not read the common EDID information from the EEPROM 250 as well as the case in which a plurality of external input sources are always simultaneously connected to the plurality of external input ports 110, and in this case, the controller 270 may toggle a signal providing the common EDID information and control the corresponding external input source to read the common EDID information from the EEPROM 250.

When an external input source that is capable of supporting a specification other than specification supported by the common EDID information is connected to one of the plurality of input ports 110, the corresponding external input source may read additional EDID information other than the common EDID information.

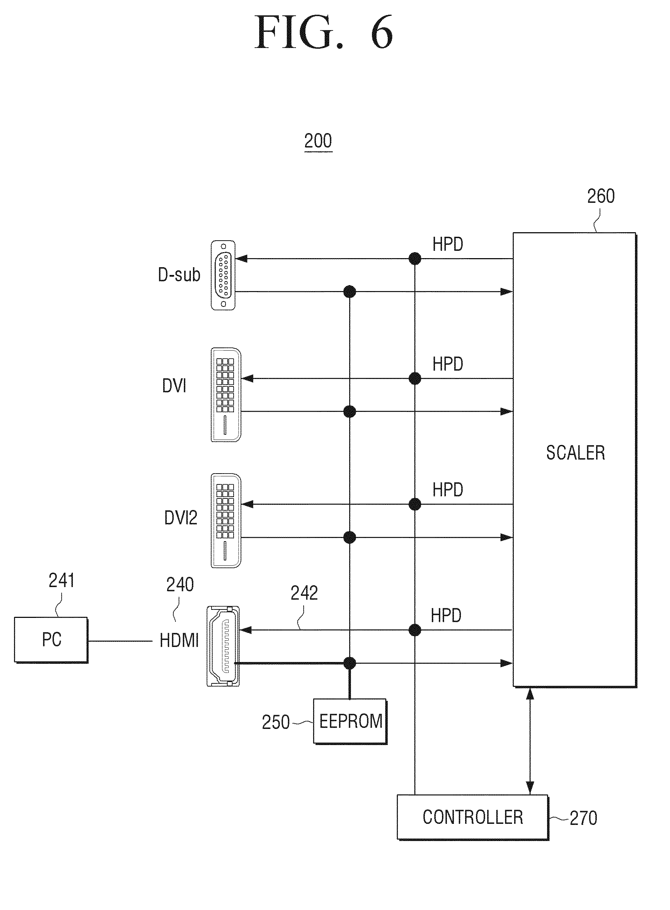

FIG. 6 is a diagram for an explanation of the case in which an external input source device connected to an input port is capable of supporting additional EDID information according to an exemplary embodiment.

In detail, the controller 270 may toggle a signal generated when at least one of a plurality of external input sources recognizes the electronic apparatus 200 and control the plurality of external input sources to read individual EDID information items that respectively correspond to the plurality of input ports 110 from the scaler 260.

Referring to FIG. 6, a PC 241 connected to the HDMI port 240 may read the common EDID information from the EEPROM 250 based on power supplied from the PC 241. A thick line connected between the EEPROM 250 and the HDMI port 240 to which the PC 241 is connected indicates that the common EDID information is read from the EEPROM 250 and is provided to the PC 241.

Here, when the PC connected to the HDMI port 240 is capable of supporting a specification other than specification corresponding to the common EDID information, the controller 270 may toggle a signal generated when the PC 241 recognizes the electronic apparatus 200 and control the PC 241 to read individual EDID information corresponding to the HDMI port 240 from the scaler 260.

For example, assuming that EDID information corresponding to D-sub standard may include information indicating that the maximum outputtable resolution is 1280x720, EDID information corresponding to the DVI standard may include information indicating that the maximum outputtable resolution is 1920x1080, and EDID information corresponding to the HDMI standard may include information indicating that the maximum outputtable resolution is 2560x1440, common EDID information stored in the EEPROM 250 may include information indicating that the maximum outputtable resolution is 1280x720.

In addition, all of the EDID information corresponding to the D-sub standard, the EDID information corresponding to the DVI standard, and the EDID information corresponding to the HDMI standard may be stored in the scaler 260.

In this case, since the PC 241 connected to the HDMI port 240 may have maximum outputtable resolution of 2560x1440, the PC 241 may support a higher resolution than 1280x720 as the maximum resolution supported by the common EDID information.

Accordingly, when the PC 241 connected to the HDMI port 240 outputs content to the electronic apparatus 200, the controller 270 may toggle the signal 500 generated when the PC 241 recognizes the electronic apparatus 200 and control the PC 241 to read individual EDID information corresponding to the HDMI port 240 from the scaler 260 in order to support resolution with 2560x1440.

In addition, the PC 241 may set the resolution to 2560x1440 based on individual EDID information corresponding to the HDMI port 240, read from the scaler 260, and may output content to the electronic apparatus 200.

That is, the plurality of external input sources connected to the plurality of input ports 110 may read common EDID information stored in the storage 120, and with regard to an external input source that is capable of supporting specification other than specification supported by common EDID information, the controller 130 may toggle a signal generated when the corresponding external input source recognizes the electronic apparatus 100 and control the corresponding external input source to read individual EDID information corresponding to the connected input port from the scaler 140.

With regard to description of FIG. 6, although resolution as an example of specification other than specification supported by common EDID information has been described, needless to say, the specification may include various display information items other than resolution.

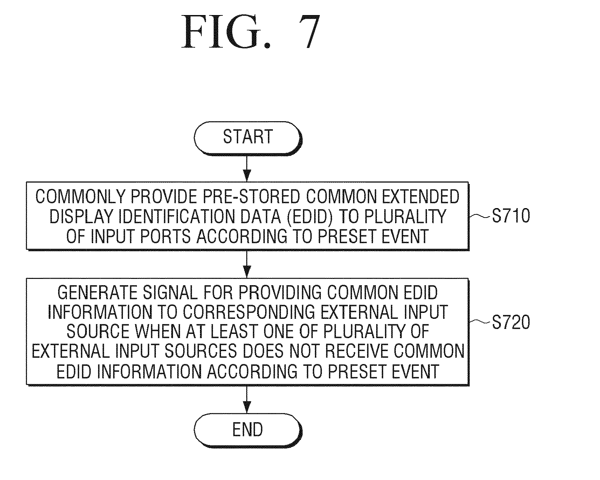

FIG. 7 is a flowchart for an explanation of a method for controlling an electronic apparatus including a plurality of input ports to be respectively connected to a plurality of external input sources, according to an exemplary embodiment.

In the method illustrated in FIG. 7, pre-stored common extended display identification data (EDID) is commonly provided to a plurality of input ports according to a preset event (S710).

Here, the common EDID information may be stored in a common memory that is connected to each of a plurality of input ports, provided outside a scaler for storing individual EDID information items that respectively correspond to the plurality of input ports, and are commonly connected to the plurality of input ports.

In addition, the common memory may be an electrically erasable programmable read-only memory (EEPROM).

In the providing, EDID information may be provided to a plurality of external input sources through a plurality of input ports activated based on power supplied from the plurality of external input sources.

Then when at least one of the plurality of external input sources may not have received common EDID information according to a preset event, a signal for providing common EDID information to a corresponding external input source may be generated (S720).

Here, in the generating, when at least one of the plurality of external input sources may not receive the common EDID information and may not perform output corresponding to the corresponding external input source, the signal for providing the common EDID information may be toggled and the plurality of external input sources may be controlled to read the common EDID information from the common memory.

In addition, the signal for providing the common EDID information may include a signal generated when a preset event occurs and the plurality of external input sources recognize an electronic apparatus.

The method for controlling an electronic apparatus according to an exemplary embodiment may include toggling a signal generated when at least one of a plurality of external input sources recognizes an electronic apparatus and controlling the plurality of external input sources to read individual EDID information items that respectively correspond to the plurality of external input sources from a scaler.

Here, the preset event refers to an event in which a plurality of external input sources is connected to a plurality of input ports.

A non-transitory computer readable medium for storing a program for sequentially performing the controlling method according to the embodiments may be provided.

For example, a non-transitory computer readable medium for storing a program for performing the commonly providing of pre-stored common extended display identification data (EDID) by a computer or controller to a plurality of common input ports according to a preset event and the generating of the signal for providing the common EDID information to the corresponding external input source when at least one of the plurality of external input sources may not receive common EDID information according to a preset event may be provided.

The non-transitory computer readable medium is a medium which does not store data temporarily such as a register, cash, and memory but stores data semi-permanently and is readable by devices. More specifically, the aforementioned applications or programs may be stored in the non-transitory computer readable media such as compact disks (CDs), digital video disks (DVDs), hard disks, Blu-ray disks, universal serial buses (USBs), memory cards, and read-only memory (ROM).

In addition, although a bus is not shown in the above block diagram of an electronic apparatus, communication between components of the electronic apparatus may be performed through the bus. In addition, each device may further include a processor such as a central processing unit (CPU) and a micro processor, for the various aforementioned operations.

The foregoing exemplary embodiments and advantages are merely exemplary and are not to be construed as limiting the embodiments. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Although a few embodiments have been shown and described, it would be appreciated by those skilled in the art that changes may be made in these embodiments without departing from the principles of the invention, the scope of which is defined in the claims.

## Claims

1. An electronic apparatus, comprising:
a plurality of input ports configured to be respectively connected to a plurality of external input sources;
a storage configured to store extended display identification data (EDID) information commonly provided to the plurality of input ports as common EDID information; and
a controller configured to provide the common EDID information to a corresponding external input source when at least one of the plurality of external input sources does not receive the common EDID information according to a preset event.

2. The electronic apparatus as claimed in claim 1, further comprising a scaler connected to each of the plurality of input ports and configured to store individual EDID information items respectively corresponding to the plurality of input ports.

3. The electronic apparatus as claimed in claim 2, wherein the storage is a common memory commonly connected to the plurality of input ports.

4. The electronic apparatus as claimed in claim 3, wherein the common memory is an electrically erasable programmable read-only memory (EEPROM).

5. The electronic apparatus as claimed in claim 3 or 4, wherein the common memory provides the EDID information to the plurality of external input sources through the plurality of input ports activated based on power supplied by the plurality of external input sources.

6. The electronic apparatus as claimed in any one of claims 3 to 5, wherein the controller toggles a signal for providing the common EDID information and controls the plurality of external input sources to read the common EDID information from the common memory when at least one of the plurality of external input sources does not receive the common EDID information and does not perform output corresponding to the corresponding external input source.

7. The electronic apparatus as claimed in claim 6, wherein the signal for providing the common EDID information comprises a recognition signal generated when the plurality of external input sources recognize the electronic apparatus in response to the preset event.

8. The electronic apparatus as claimed in claim 7, wherein the controller toggles a control signal generated when at least one of the plurality of external input sources recognizes the electronic apparatus and controls the plurality of external input sources to read individual EDID information items respectively corresponding to the plurality of input ports from the scaler.

9. The electronic apparatus as claimed in any one of claims 1 to 8, wherein the preset event is a connection event in which at least one of the plurality of external input sources is connected to at least one of the plurality of input ports.

10. A method for controlling an electronic apparatus comprising a plurality of input ports configured to be respectively connected to a plurality of external input sources, the method comprising:
commonly providing pre-stored extended display identification data (EDID) to the plurality of input ports as common EDID information; and
generating a signal for providing the common EDID information to a corresponding external input source when at least one of the plurality of external input sources does not receive the common EDID information according to a preset event.

11. The method as claimed in claim 10, wherein the common EDID information is stored in a common memory connected to each of the plurality of input ports, provided outside a scaler storing individual EDID information items respectively corresponding to the plurality of input ports, and commonly connected to each of the plurality of input ports.

12. The method as claimed in claim 11, wherein the common memory is an electrically erasable programmable read-only memory (EEPROM).

13. The method as claimed in claim 11 or 12, wherein the providing comprises providing the EDID information to the plurality of external input sources through the plurality of input ports activated based on power supplied from the plurality of external input sources.

14. The method as claimed in any one of claims 11 to 13, wherein the generating comprises toggling a provision signal for providing the common EDID information and controlling the plurality of external input sources to read the common EDID information from the common memory when at least one of the plurality of external input sources does not receive the common EDID information and not performing output corresponding to the corresponding external input source.

15. The method as claimed in claim 14, wherein the signal for providing the common EDID information comprises a recognition signal generated when the plurality of external input sources recognize the electronic apparatus in response to the preset event occurring.
